(19) Europäisches Patentamt
European Patent Office
Office européen des brevets

(11) Publication number: **0 667 388 A1**

(12) **EUROPEAN PATENT APPLICATION**

(21) Application number: **95101160.0**

(22) Date of filing: **27.01.95**

(51) Int. Cl.[6]: **C10M 107/50**, C08L 83/06, C08L 83/04, //(C10M107/50, 107:50),C10N40:00,C10N40:36

(30) Priority: **28.01.94 JP 25990/94**

(43) Date of publication of application: **16.08.95 Bulletin 95/33**

(84) Designated Contracting States: **DE FR**

(71) Applicant: **Dow Corning Toray Silicone Company, Limited**
**Mitsui Bldg. No. 6,**
**2-3-16, Nihonbashi-Muromachi,**
**Chuo-Ku**
**Tokyo 103 (JP)**

(72) Inventor: **Ishikawa, Hiroki, Dow Corning Toray Sili. Co., Ltd**
**2-2, Chigusa Kaigan**
**Ichihara-shi,**
**Chiba Prefecture (JP)**
Inventor: **Naganawa, Tsutomu, Dow Corning Toray Sili. Co.,Ltd**
**2-2, Chigusa Kaigan**
**Ichihara-shi,**
**Chiba Prefecture (JP)**
Inventor: **Ona, Isao, Dow Corning Toray Sili. Co., Ltd.**
**2-2, Chigusa Kaigan**
**Ichihara-shi,**
**Chiba Prefecture (JP)**

(74) Representative: **Spott, Gottfried, Dr.**
**Spott, Weinmiller & Partner**
**Sendlinger-Tor-Platz 11**
**D-80336 München (DE)**

(54) **Organosiloxane lubricant compositions.**

(57) Hydroxyphenyl-substituted polydiorganosiloxane oils having an average phenol equivalent within a specific range exhibit excellent heat resistance, release characteristics, and lubricity. They are suitable for use as mold release agents, for toner release in electrostatic copiers and as lubricants during false twisting of textile fibers.

EP 0 667 388 A1

This invention relates to organosiloxane lubricant compositions containing a class of heat resistant polydiorganosiloxanes that are suitable for use as mold release agents and lubricants for textile fibers.

Because polydiorganosiloxane oils have good heat resistance and release characteristics, these oils are widely used as mold-release agents during the molding of thermoplastic resins, thermosetting resins, and various rubbers, and as toner release agents for electrostatic copying machines. When polydimethylsiloxane oils, which are a class of polydiorganosiloxane oils, are used as release agents for metal molds, they undergo a gradual thermal decomposition as the mold approaches 150 ° C. This decomposition is more drastic at temperatures above 200 ° C, producing sticky, gel-like materials, Because of this problem, when a polydimethylsiloxane oil is used for an extended period of time as the mold-release agent, product moldings having smooth surfaces cannot be obtained due to the accumulation of gel-like substances.

Also, in high speed xerographic copiers, the heated roll is used at high temperatures, typically about 200 ° C. When polydimethylsiloxane oil is used as a toner release agent, its thermal decomposition presents a problem.

To improve the productivity of molding or to shorten copying time, the temperatures of the metal mold or the heated copier roll have been raised even higher in recent times. Therefore, there is a demand for release agents having improved heat resistance.

Mold-release agents consisting of a mercapto-functional polydiorganosiloxane oil with a phenol oxidation inhibitor are disclosed in JP-A 61-218660. Amino group-containing polydiorganosiloxane oils with an amine equivalent within a specified range are described in JP-A 3-227206.

As for toner release agents, polydiorganosiloxane oils containing organofunctional groups such as carboxyl groups, hydroxyl groups, amino groups, and epoxy groups are described in JP-A 51-36141.

Because of their excellent heat resistance, similar polydiorganosiloxane oils are used as lubricants for various synthetic fibers during false twisting of textile fibers, and as lubricants for carbon fibers and tire cord fibers. Polydiorganosiloxane oils used for these applications, such as amino group-containing polydiorganosiloxane oils are described in JP-A 60-185879 and 60-185880.

However, when these amino group-containing polydiorganosiloxanes are applied at temperatures above 300 ° C, as practiced in the thermosetting process of textile for industrial tire cord or in the manufacturing process of carbon fiber, they occasionally emit a characteristic ammonia odor, discolor, or cause gelation during the extended heating cycles. Therefore, they are not completely satisfactory as a solution to the aforementioned problems.

We have found that certain hydroxyphenyl substituted polydiorganosiloxane oils, having an average phenol equivalent within a specific range, exhibit excellent heat resistance, release characteristics, and lubricity. With them all of the above problems can be solved.

An objective of the present invention is to provide a class of organosiloxane lubricants exhibiting excellent heat resistance, release characteristics, and lubricity.

The objectives of this invention are achieved by using organosiloxane compositions comprising a polydiorganosiloxane containing no amino groups and a concentration of hydroxyphenyl groups within a specified range.

The present invention provides hydroxyphenyl group-containing polydiorganosiloxane oils that are free of amino groups, have a viscosity at 25 ° C from 10-100,000 centistokes (mm2/s), and an average phenol equivalent from 10,000-5,000,000.

These hydroxyphenyl-substituted oils are optionally used in combination with other polydiorganosiloxanes to improve their performance as mold release agents or lubricants.

When the average phenol equivalent is below 10,000, intermolecular bonding at high temperature increases and the oil tends to gel at relatively low temperatures. When the average phenol equivalent exceeds 5,000,000, the improved heat resistance imparted by hydroxyphenyl groups may not be evident.

The average phenol equivalent of the present polydiorganosiloxanes is preferably in the range of 50,000-2,000,000, and their viscosity is preferably in the range of 10-50,000 centistokes ($1x10^{-5}$ - $5x10^{-2}$ $m^2/s$).

The hydroxyphenyl group present in the polydiorganosiloxanes of this invention are represented by the formula:

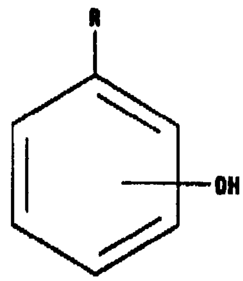

R is a divalent hydrocarbon radical that includes alkylene radicals such as ethylene, propylene, butylene, and isobutylene and alkylenearylene radicals of the formula $-(CH_2)_2-C_6H_4-$. Ethylene is a preferred alkylene radical. The hydroxyl group of the hydroxyphenyl group can be bonded at the ortho, meta, or para position on the phenyl ring. The hydroxyphenyl group can be located on a terminal or non-terminal silicon atom, or at both of these positions.

The silicon-bonded hydrocarbon radicals other than hydroxyphenyl that can be present include alkyl such as methyl, ethyl, propyl, hexyl and octyl; alkenyl such as vinyl, allyl, and hexenyl; aryl such as phenyl; aralkyl such as 2-phenylisopropyl; substituted monovalent hydrocarbons such as 3,3,3-trifluoropropyl, carboxyl group-containing monovalent hydrocarbon radicals of the formula: $-(CH_2)_x-COOH$; hydroxyl group-containing monovalent hydrocarbon radicals of the formula; $-(CH_2)_x-OH$; oxyalkylene group-containing monovalent: hydrocarbon radicals of the formula; $-(CH_2)_x-(C_2H_4O)_2H$; and mercapto group-containing monovalent hydrocarbon groups of the formula $-(CH_2)_x-SH$. In these formulae, x is an integer with a value of at least 1.

The present polydiorganosiloxane oils can be prepared by the addition reaction of p-vinylphenol or p-allylphenol to a polydiorganosiloxane oil containing silicon-bonded hydrogen atoms This reaction is conducted in the presence of a platinum-group, metal-containing, addition reaction catalyst such as chloroplatinic acid.

The hydroxyphenyl-substituted polydiorganosiloxane oils of our invention can be either the polydiorganosiloxane oil itself, which is manufactured as described above and contains at least 1 hydroxyphenyl group in a molecule, or a mixture of our hydroxyphenyl-substituted polydiorganosiloxane oil with a polydiorganosiloxane oil which does not contain a hydroxyphenyl group. Such a mixture can be manufactured by including a polydiorganosiloxane oil which does not react with p-vinylphenol or p-allylphenol during the preparation of our hydroxyphenyl-substituted polydiorganosiloxane oil. Mixtures of these oils can also be obtained by blending one or more polydiorganosiloxane oils, which are prepared separately and do not contain hydroxyphenyl group, and our polydiorganosiloxane oil which is contains at least 1 hydroxyphenyl group in a molecule.

Our present hydroxyphenyl-substituted polydiorganosiloxane oils can be a mixture of a polydiorganosiloxane oil which does not contain hydroxyphenyl or amino groups, referred to hereinafter as ingredient A, and a polydiorganosiloxane oil which contains at least 1 hydroxyphenyl group in a molecule and does not contain amino group, referred to hereinafter as ingredient B. Such a mixture is easy to prepare, and is preferred because it is easy to control the average phenol equivalent.

The only requirement for ingredient A is that it not contain hydroxyphenyl or amino groups. Suitable oils are represented by the general formula:

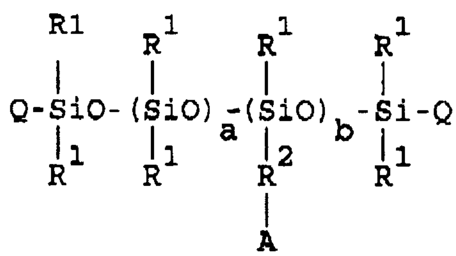

$R^1$ is a substituted or unsubstituted monovalent hydrocarbon radical, which can be alkyl group such as methyl, ethyl, propyl, hexyl, or octyl; alkenyl group such as vinyl, allyl, or hexenyl; aryl group such as phenyl; aralkyl such as 2-phenylisopropyl, or a substituted hydrocarbon radical such as 3,3,3-trifluoropropyl

group. $R^1$ is preferably methyl.

$R^2$ represents a divalent hydrocarbon radical, which can be ethylene, propylene, butylene, or isobutylene group. A represents a monovalent organic group, which can be an amide group such as: $-NHCOCH_3$; a carboxyl group; a hydroxyl group; an oxyalkylene group such as: $-(C_2H_4O)_2H$; or a mercapto group.

Q represents a substituted or unsubstituted monovalent hydrocarbon radical selected from the same group as $R^1$ or a group expressed by the formula: $-R^2-A$ wherein $R^2$ and A are as defined above. a is a number of 1 or greater and b is a number 0 or equal or greater than 1.

Examples of suitable polydiorganosiloxane oils are polydimethylsiloxane oil, dimethylsiloxane-methylethylsiloxane copolymer oil, dimethylsiloxane-methylvinylsiloxane copolymer oil, dimethylsiloxane-methylphenylsiloxane copolymer oil, dimethylsiloxane-diphenylsiloxane copolymer oil, dimethylsiloxane-methyldodecenylsiloxane copolymer oil, methyldodecenylsiloxane/methyltetradecenylsiloxane copolymer oil, polydiorganosiloxane oil of the formula:

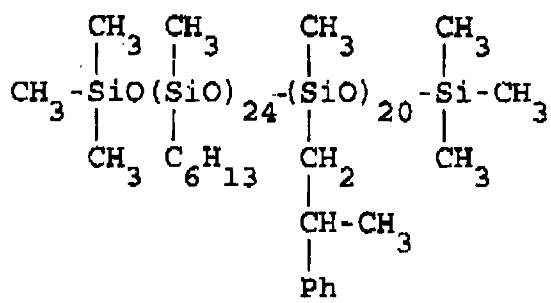

where Ph represents a phenyl radical; a carboxyl-substituted polydiorganosiloxane oil of the formula:

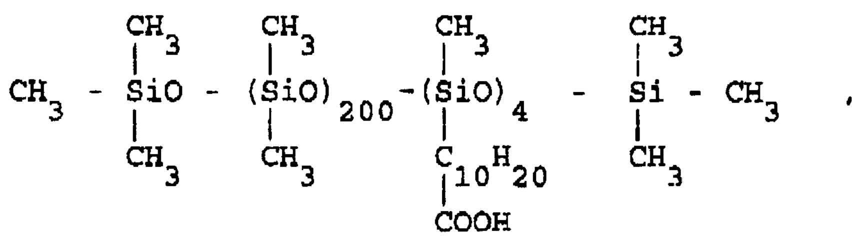

a hydroxyl-substituted polydiorganosiloxane oil of the formula:

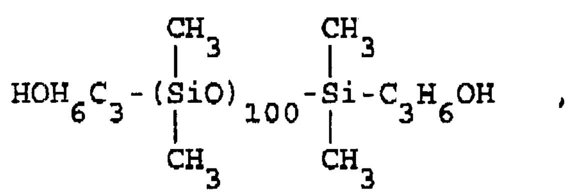

and a mercapto-substituted polydiorganosiloxane oil of the formula :

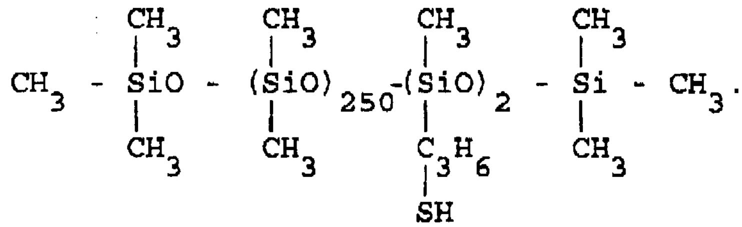

The viscosity of the polydiorganosiloxane oil used as ingredient A, measured at 25°C, is in the range of 10-100,000 centistokes ($1x10^{-5}$ to 1 $m^2/s$).

Our polydiorganosiloxane ingredient B of the present compositions, are responsible for improving the heat resistance inhibiting the viscosity increase, and preventing gelation that might occur during heating of our compositions. This ingredient should contain at least 1 hydroxyphenyl group in a molecule and should not contain amino group. The hydroxyphenyl group can be expressed by the formula:

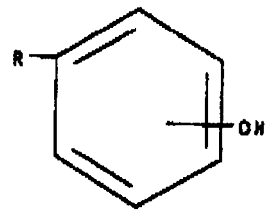

R is a divalent hydrocarbon group, and can be alkylene such as ethylene, propylene, butylene, or isobutylene; or an alkylenearylene such as expressed by the formula: $-(CH_2)_2-C_6H_4-$. Among these, the ethylene group is the most common and is preferred. The hydroxyl group in the hydroxyphenyl group can be bonded at the ortho, meta, or para position of the phenyl ring.

The hydroxyphenyl group can be bonded to terminal or non-terminal silicon atoms, or at both of these locations in the polydiorganosiloxane. The silicon-bonded groups other than hydroxyphenyl that are present in ingredient B include alkyl radicals such as methyl, ethyl, propyl, hexyl, and octyl; alkenyl radicals such as vinyl, allyl, and hexenyl; aryl radicals such as phenyl; arylenealkyl radicals such as those represented by the formula

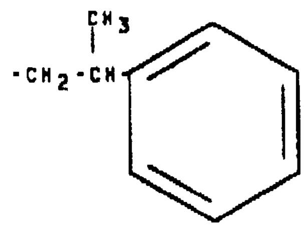

substituted or unsubstituted monovalent hydrocarbon groups that are illustrated by substituted monovalent hydrocarbon radicals such as 3,3,3-trifluoropropyl, carboxyl-substituted monovalent hydrocarbons of the formula: $-(CH_2)_x$-COOH wherein x is an integer 1 or greater, hydroxyl-substituted monovalent hydrocarbons of the formula: $-(CH_2)_xOH$ wherein x is the same as described above; oxyalkylene-substituted monovalent hydrocarbons of the formula: $-(CH_2)_x-(C_2H_4O)_2H$ wherein x is the same as above; and mercapto-substituted monovalent hydrocarbons of the formula: $-(CH_2)_x$-SH wherein x as described above.

The average phenol equivalent of ingredient B is in the range of 500-8,000, and preferably in the range of 1,000-5,000. The viscosity of ingredient A at 25°C is in the range of 20-50,000 centistokes (mm2/s), and more preferably in the range of 50-10,000 centistokes (mm2/s). These polydiorganosiloxane oils can be easily manufactured by, for example, by the addition reaction of p-vinylphenol or p-allylphenol to polydiorganosiloxane oils containing silicon-bonded hydrogen atoms. The reaction is conducted in the presence of a hydrosilation reaction catalyst such as chloroplatinic acid.

The concentration of ingredient B in our compositions is usually if the range of 0.001-1000 parts by weight for each 100 parts by weight of ingredient A.

Mixtures comprising ingredient A and B can be manufactured easily by mixing the specified amounts of these two ingredients uniformly at room temperature. For example, when 90 parts by weight of a polydiorganosiloxane oil corresponding to ingredient A is blended with 10 parts of a polydiorganosiloxane oil corresponding to ingredient B and exhibiting an average phenol equivalent of 2,000, and mixed uniformly, a hydroxyphenyl-substituted polydiorganosiloxane oil having an average phenol equivalent of 20,000 is obtained.

Similarly, when 990 parts by weight of a polydiorganosiloxane oil corresponding to ingredient A is added to 10 parts by weight of a polydiorganosiloxane oil corresponding to ingredient B with an average phenol equivalent of 2,000 and mixed uniformly, a hydroxyphenyl-substituted polydiorganosiloxane oil having an average phenol equivalent of 200,000 is obtained.

Although the mold-releasing lubricant of our invention is a hydroxyphenyl-substituted polydiorganosiloxane as described above, as long as the objective of the present invention is not impaired, our polydiorganosiloxane can be compounded with inorganic powders such as mica, talc, zinc oxide, and calcium carbonate; organic compounds such as paraffin and wax; organic solvents such as toluene, xylene, hexane, heptane, 1,1,1-trichloroethane, and 1,1,2,2-tetrachloroethane; nonionic surfactants such as polyoxyalkylenealkylethers, polyoxyalkylenealkylphenylethers, polyoxyalkylenealkylesters, polyoxyalkylenesorbitanalkylesters, sorbitanalkylesters, polyethylene glycol and polypropylene glycol; cationic surfactants such as octyltrimethylammonium hydroxide, dodecyltrimethylammonium hydroxide, hexadecyltrimethylammonium hydroxide, octyldimethylbenzylammonium hydroxide, decyldimethylammonium hydroxide, didodecyldimethylammonium hydroxide, dioctadecyldimethylammonium hydroxide, beef tallow trimethylammonium hydroxide, and coconut oil trimethylammonium hydroxide; or anionic surfactants such as dodecylbenzene sulfonate or higher alcohol sulfate esters.

Because the mold-releasing lubricants of our invention exhibits excellent heat resistance, these lubricants are suitable for use as mold-release agents for plastics and rubber, as toner release agents in copying machines, as an oil agent for synthetic fibers, including textile fibers, carbon fibers and tire cord fibers, and as an oil applied prior to false twisting in textile treatments, and as a heat exchange medium.

When our compositions are used as mold-release agents, our hydroxyphenyl-substituted polydiorganosiloxane oil is diluted using an organic solvent such as toluene or xylene, or emulsified using various surfactants and water and then further diluted with water, following which a small amount is sprayed on to the mold in a uniform manner.

In order to prepare the emulsion, from 5 to 30 parts by weight of a surfactant is blended with 100 parts by weight of at least one of our hydroxyphenyl-substituted polydiorganosiloxane oils. The emulsion is then blended to achieve a concentration of the oil in the final composition of from 5 to 60 weight %, preferably from 10 to 50 weight %.

When our present lubricants are used as toner release agents, our hydroxyphenyl-substituted polydiorganosiloxane is often used in an undiluted form.

When our lubricants are used as the oil agent for synthetic fibers, our hydroxyphenyl-substituted polydiorganosiloxane oil is used undiluted, is diluted using various organic solvents, or is emulsified using a surfactant and water. When our hydroxyphenyl-substituted polydiorganosiloxane oil is used in an undiluted form, it is coated uniformly on the fibrous material using, for example, a roller.

The fibrous material can be a continuous filament, spun yarn, or tow. When our lubricant is used as an emulsion, it is generally coated on the fibrous material by the kiss roll method, or by continuously passing yarn through the emulsion. In this case, the emulsion can be diluted with water. The amount of lubricant applied to the fiber is in the range of 0.2-2.0 weight percent.

The following examples describe preferred embodiments of our lubricants and end use applications for our lubricants. Unless otherwise specified, all parts and percentages in the examples are by weight and viscosities are the values measured at 25 ° C.

Example 1

180 parts of a trimethylsiloxy-capped dimethylpolysiloxane having a viscosity of 1000 centistokes ($10^{-3}$ $m^2/s$) was blended with 120 parts of a polydimethylsiloxane expressed by the formula

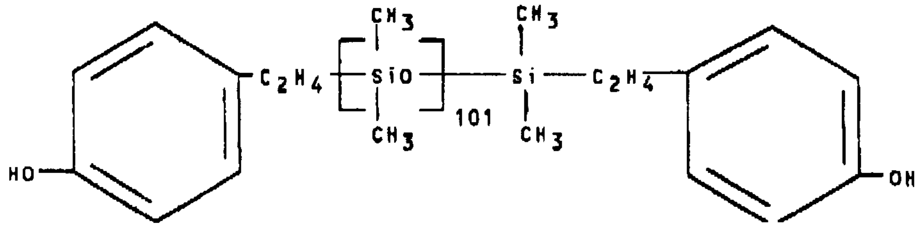

and having a viscosity of 250 centistokes (mm2/s) and an average phenol equivalent of 3900, and mixed uniformly. The resultant clear hydroxyphenyl-substituted polydiorganosiloxane oil exhibited an average phenol equivalent of 10,000 and a viscosity of 575 centistokes ($5.75x10^{-4}$ $m^2/s$). The viscosity change of the hydroxyphenyl-substituted polydiorganosiloxane oil and the occurrence of gelation on the hot plate of the false twister were measured by the methods described below.

This lubricant was also coated on a tire cord fiber, following which the coefficients of static friction and kinetic friction between this fiber and the metal (SUS) were measured. The results are summarized in Table 1. The results of the evaluation of this lubricant as a lubricant for the false twisting of textile fibers are also recorded in Table 1.

Viscosity change

30 grams of the hydroxyphenyl-substituted polydiorganosiloxane oil were placed in a 100 $cm^3$ beaker. This was then covered by a 300 $cm^3$ beaker, and placed in a hot-air circulating oven at 200 °C for heat treatment for specified times (50 hours, 100 hours, 200 hours, and 300 hours). After cooling, the viscosity of the hydroxyphenyl-substituted polydiorganosiloxane oils was measured using an E-type rotational viscometer.

Occurrence of gelation on the hot plate of the false twister

A drop of the hydroxyphenyl-substituted polydiorganosiloxane oil to be evaluated was placed on the hot plate of a false twister for woolly nylon. The hot plate was then heat-treated in an oven at 300 °C for 3 hours. After the heat treatment, it was taken out of the oven and any occurrence of gelation was noted.

Manufacturing of tire cord fiber

0.3 parts of the hydroxyphenyl-substituted polydiorganosiloxane oil to be evaluated was dissolved in 99.7 parts of toluene. The resultant solution was coated on polyester tire cord fiber for the seat belt of an automobile to achieve a concentration of 0.3 weight %, based on the weight of the fiber. The fiber was then held at room temperature to evaporate the toluene.

Example 2

A clear hydroxyphenyl-substituted polydiorganosiloxane oil with an average phenol equivalent of 50,000 and a viscosity of 840 centistokes ($8.4x10^{-4}$ $m^2/s$) was prepared as in Example 1 except that the amount of trimethylsiloxy-capped polydimethylsiloxane was 276 parts and the amount of dimethylpolysiloxane with the average phenol equivalent of 3900 was 24 parts. The viscosity change and the occurrence of gelation on the hot plate of the false twister of the hydroxyphenyl-substituted polydiorganosiloxane oil were measured as described in Example 1. Also, for the tire cord fiber coated similarly to Example 1 with the obtained hydroxyphenyl-substituted polydiorganosiloxane oil, the coefficients of static friction and kinetic friction between this fiber and the metal (SUS) were measured. These results are also summarized in Table 1. Furthermore, also noted in Table 1 is the overall evaluation of this hydroxyphenyl-substituted polydiorganosiloxane oil as the oil agent for false twisting in textile fiber treatment.

Example 3

A clear hydroxyphenyl-substituted polydiorganosiloxane oil with an average phenol equivalent of 200,000 and a viscosity of 912 centistokes ($9.12x10^{-4}$ $m^2/s$) was prepared as described in Example 1 except that the amount of trimethylsiloxy-capped dimethylpolysiloxane was changed to 288 parts and the compounding amount of polydimethylsiloxane of the average phenol equivalent 3900 was changed to 6 parts. The viscosity change and the occurrence of gelation on the hot plate of the false twister of the hydroxyphenyl-substituted polydiorganosiloxane oil were measured in Example 1. Also, for a tire cord fiber coated in Example 1, the coefficients of static friction and kinetic friction between this fiber and the metal (SUS) were measured. These results are listed in Table 1. Also recorded in Table 1 is the overall evaluation of this hydroxyphenyl-substituted polydiorganosiloxane oil as the oil agent for false twisting of textile fibers.

Example 4

A clear hydroxyphenyl-substituted polydiorganosiloxane oil, with an average phenol equivalent of 2,000,000 and a viscosity of 997 centistokes ($9.97x10^{-4} m^2/s$), was prepared as described in Example 1 except that the compounding amount of trimethylsiloxy-capped polydimethylsiloxane was changed to 298 parts and the compounding amount of polydimethylsiloxane of the average phenol equivalent 3900 was changed to 0.6 part. The viscosity change and the occurrence of gelation on the hot plate of the false

twister of the hydroxyphenyl-substituted polydiorganosiloxane oil were measured by the same methods as Example 1. Also, for the tire cord fiber coated as described in Example 1, the coefficients of static friction and kinetic friction between this fiber and the metal (SUS) were measured. These results are also listed in Table 1. The overall evaluation of this hydroxyphenyl-substituted polydiorganosiloxane oil as the oil agent for false twisting of textile fibers is also recorded in Table 1.

Comparison Example 1

Using the methods described in Example 1, the viscosity change and the occurrence of gelation on the hot plate of the false twister for the trimethylsiloxy-capped polydimethylsiloxane used in Example 1 were evaluated. This polydimethylsiloxane was also used to coat tire cord and the coefficients of static friction and kinetic friction between this fiber and the metal (SUS) were measured. All of these results are summarized in Table 1 together with the evaluation of this polydimethylsiloxane as the oil agent for false twisting in textile fibers.

Comparison Example 2

The viscosity change and the occurrence of gelation on the hot plate of the false twister of the hydroxyphenyl-substituted polydimethylsiloxane described in Example 1 were measured by the same methods as Example 1. Also, for the tire cord fiber coated similarly to Example 1 with this hydroxyphenyl-substituted dimethylpolysiloxane, the coefficients of static friction and kinetic friction between this fiber and the metal (SUS) were measured. These results are shown in Table 1. Furthermore, also noted in Table 1 is the overall evaluation of this hydroxyphenyl-substituted dimethylpolysiloxane as the oil agent for false twisting of textile fibers.

Comparison Example 3

A hydroxyphenyl-substituted polydiorganosiloxane oil, having an average phenol equivalent of 10,000,000 and a viscosity of 1000 centistokes ($10^{-3}$ $m^2$/sec), was prepared using the procedure of Example 1 except that the amount of trimethylsiloxy-capped polydimethylsiloxane was changed to 299.88 parts and the amount of polydimethylsiloxane with an average phenol equivalent 3900 was changed to 0.12 part. The viscosity change and the occurrence of gelation on the hot plate of the false twister of the obtained hydroxyphenyl-substituted polydiorganosiloxane oil were measured by the same methods as Example 1. Also, for the tire cord fiber coated similarly to Example 1 with the obtained hydroxyphenyl-substituted polydiorganosiloxane oil, the coefficients of static friction and kinetic friction between this fiber and the metal (SUS) were measured. These results were shown in Table 1. Furthermore, also noted in Table 1 is the overall evaluation of this hydroxyphenyl-substituted polydiorganosiloxane oil as the oil agent for false twist in textile treatment.

Table 1

| | Example 1 | Example 2 | Example 3 | Example 4 | Comparison example 1 | Comparison example 2 | Comparison example 3 |
|---|---|---|---|---|---|---|---|
| Viscosity change $mm^2/s$ (centistokes) | | | | | | | |
| 50 hours | 588 | 860 | 922 | 1020 | 1115 | 626 | 1020 |
| 100 hours | 658 | 900 | 955 | 1053 | 1306 | 8550 | 1232 |
| 200 hours | 831 | 922 | 989 | 1148 | 3483 | Not measurable | 2380 |
| 300 hours | 1504 | 1045 | 1033 | 1691 | Not measurable | Not measurable | Not measurable |
| Coefficient of static friction | 0.295 | 0.288 | 0.291 | 0.293 | 0.309 | 0.289 | 0.300 |
| Coefficient of kinetic friction | 0.239 | 0.234 | 0.235 | 0.239 | 0.244 | 0.233 | 0.238 |
| Occurrence of gelation on the hot plate of the false twister | Not gelled, and spread over the hot plate in liquid state | Not gelled, and spread over the hot plate in liquid state | Not gelled, and spread over the hot plate in liquid state | Not gelled, and spread over the hot plate in liquid state | Gelled, and the gelled substance stuck on the hot plate | Gelled, and the gelled substance stuck on the hot plate | Gelled, and the gelled substance stuck on the hot plate |
| Overall evaluation | Adequate | Adequate | Adequate | Adequate | Inadequate | Inadequate | Inadequate |

"Not measurable" means that the viscosity could not be measured because of the pronounced gelation.

Example 5

90 parts of a phenyl group-containing diorganopolysiloxane represented by the formula

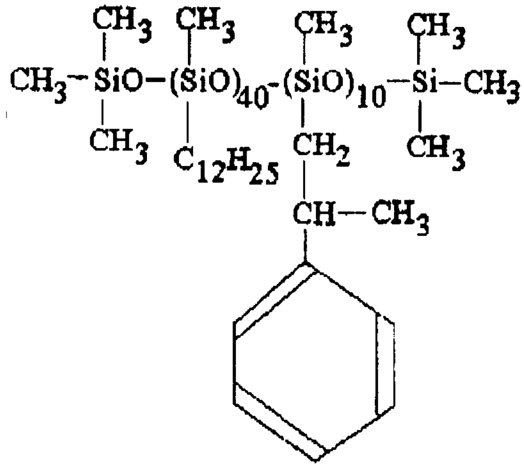

with the viscosity 1010 centistokes (mm2/s), was blended with 10 parts of a polydiorganosiloxane represented by the formula

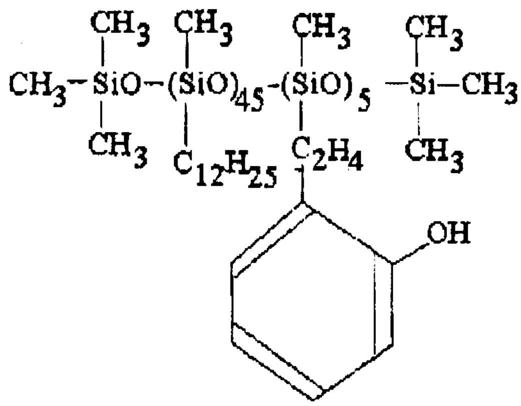

and having a viscosity of 1022 centistokes ($1.022 \times 10^{-3}$ $m^2/s$. and an average phenol equivalent of 2264 to obtain a phenol group-containing polydiorganosiloxane oil with an average phenol equivalent of 22,640 and a viscosity of 1017 centistokes ($1.017 \times 10^{-3}$ $m^2/s$.

The heat resistance, mold-release characteristics, and the surface condition of moldings using our phenol group-containing diorganopolysiloxane oil were measured by the following methods. These results are summarized in Table 2 together with the results of the overall evaluation of our phenol group-containing diorganopolysiloxane oil as a mold-releasing agent.

Heat Resistance

Two grams of our phenol group-containing diorganopolysiloxane oil were placed in an aluminum container, 5 cm in diameter and 2 cm deep, and held in the stream from a hot air dryer maintained at a temeperature of 150 °C. The appearance of the sample was evaluated after time intervals of 0.5 hour, 1 hour, 2 hours and 3 hours. The heat resistance was recorded using the following criteria:

G: Good (no viscosity increase at all, and no gelation observed.)

F: Fair (Thin surface film was formed, but the inside was fluid.)

P: Poor (Total gelation, the whole body became rubbery.)

Mold-release characteristics and surface condition of moldings

Our phenol group-containing diorganopolysiloxane oil was coated on an iron mold with a mirror surface finish used for molding a rubber piece with dimensions of 25 x 25 x 0.5 cm, and heat-treated at 150 ° C for 2 hours. After cooling, the mold was cleaned by soaking in a toluene bath and shaken lightly. This mold was then filled with unvulcanized styrene/butadiene copolymer rubber, and a molding was obtained by vulcanizing at 150 ° C for 15 minutes under the pressure of 20 $kg/cm^2$. The mold-releasing behavior of this molding was measured and recorded as the mold-releasing characteristics.

The surface condition of the resultant molding was visually observed and measured whether the surface is mirror surface-like or rough. The molding was also examined to determine if any phenol group-containing diorganopolysiloxane oil was sticking to its surface.

Comparison Example 4

Using the methods described in Example 5, the heat resistance and mold-release characteristics of our phenyl group-containing diorganopolysiloxane with a viscosity of 1010 centistokes ($1.01 \times 10^{-3}$ $m^2/s$. described in Example 5 were measured together with the surface condition of the molding. The results are summarized in Table 2 together with the results of the overall evaluation of our phenyl group-containing diorganopolysiloxane as the mold-releasing agent.

Comparison Example 5

The heat resistance and mold-release characteristics of our diorganopolysiloxane with an average phenol equivalent of 2264, described in Example 5, and the surface condition of the molding were measured by the same methods as Example 5. These results are shown in Table 2 together with the results of the overall evaluation of this phenol group-containing diorganopolysiloxane as a mold-releasing agent.

Table 2

| | Example 5 | Comparison Example 4 | Comparison Example 5 |
|---|---|---|---|
| Heat resistance | | | |
| 0.5 hour | G | F | F |
| 1 hour | G | P | F-P |
| 2 hours | G | P | P |
| 3 hours | G | P | P |
| Mold-release characteristics | Good | Good | Good |
| Surface condition of molding | As smooth as mirror surface, and glossy. The surface was coated uniformly with a small amount of phenol group-containing diorganopolysiloxane oil. | Rough and not glossy. Gelled substance was sticking on the surface partially. | Rough and not glossy. Gelled substance was sticking on the surface partially. |
| Overall evaluation | Adequate | Inadequate | Inadequate |

Example 6

To 30 parts of our phenol group-containing diorganopolysiloxane oil prepared as described in Example 3 and having an average phenol equivalent of 200,000 and a viscosity of 912 centistokes $0.912 \times 10^{-3}$ $m^2/s$. were added 3.5 parts of a polyoxyethylene(8.5) mole)-nonylphenolether, 0.5 parts of a polyoxyethylene(4.5 mole)-octylphenolether sulfate sodium salt and 66 parts of water. This mixture was emulsified using a colloid mill-type emulsifier.

The occurrence of gelation of the resultant emulsion on the hot plate of the false twister was evaluated using the method in Example 3. The emulsion was also used to coat a tire cord fiber using the method in Example 3, and the the coefficients of static friction and kinetic friction between this fiber and the metal (SUS) were measured. The results are summarized in Table 3, together with the results of the evaluation of

our emulsion as our the agent for false twist in textile treatment.

Comparison Example 6

To 30 parts of the trimethylsiloxy-capped diorganopolysiloxane used in Comparison Example 1, 3.5 parts of polyoxyethylene(8.5 mole)-nonylphenolether, 0.5 part of a polyoxyethylene(4.5 mole)-octylphenolether sulfate sodium salt, and 66 parts of water were added, and an emulsion was prepared by using a colloid mill-type emulsifier. The occurrence of gelation of the obtained emulsion on the hot plate of the false twister was measured by same method of Comparison Example 1. A tire cord fiber was coated with the emulsion using the method in Comparison Example 1, and the coefficients of static friction and kinetic friction between this fiber and the metal were measured. These results are summarized in Table 3 together with the results of the overall evaluation of this emulsion as the oil agent for false twist in textile treatment.

Table 3

| | Example 6 | Comparison Example 6 |
|---|---|---|
| Coefficient of static friction<br>Coefficient of kinetic friction | 0.289<br>0.238 | 0.312<br>0.246 |
| Occurrence of gelation on the hot plate of the false twister | Not gelled at all, and spread over the hot plate in liquid state | Gelled, and the gelled substance stuck on the hot plate |
| Overall evaluation | Adequate | Inadequate |

Example 7

Two drops of our phenol group-containing diorganopolysiloxane oil described in Example 1 having an average phenol equivalent of 10,000 and a viscosity of 575 centistokes (0.575 $m^2/s$.) were placed on a clean sheet of polyester film with dimensions of 21 cm by 30 cm and 100 $\mu$m thick. This phenol group-containing diorganopolysiloxane oil was uniformly spread over the surface of the film using cotton gauze. After sprinkling 1.0 g of a black copier toner over the coated surface of the film, a sheet of white copier paper of A4 size was laid on top of it. The film and paper were then pressed for 5 minutes in a press under pressure of 5 $Kg/cm^2$ at a temperature of 110 °C. The paper-film laminate was taken out of the press, and the polyester film and the copier paper were separated, and were found to separate easily without pressure. Also, the toner was totally transferred to the copier paper, and no sticking toner was observed on the surface of the film.

The results of this evaluation demonstrated that our phenol group-containing diorganopolysiloxane oil is suitable for use as a toner release agent.

Comparison Example 7

A toner-coated polyester film and sheet of white copier paper were pressed together under the conditions described in Example 7 with the exception that the film was not coated with a layer of our phenol group-containing diorganopolysiloxane oil. After the paper/film laminated was removed from the press the paper could not be separated from the film without tearing the paper.

Example 8

Two grams of our phenol group-containing dimethylpolysiloxane oil having an average phenol equivalent of 500,000 and a viscosity of 500 centistokes ($0.5x10^{-3}$ $m^2/s$. were placed in an aluminum container 5 cm in diameter and 2 cm deep, and held in a hot air dryer at 250 °C for the following time intervals: 5 hours, 10 hours, 20 hours and 50 hours. Following each interval, the appearance of the oil was evaluated. This phenol group-containing dimethylpolysiloxane oil barely showed a viscosity increase even after 50 hours, and no gelation was observed. The result of this evaluation indicated that the heat resistance of our phenol group-containing dimethylpolysiloxane oil is good.

Comparison Example 8

The heat resistance of a phenol group-containing dimethylpolysiloxane oil with an average phenol equivalent of 300 and a viscosity of 500 centistokes (mm2/s) was measured by the same method as Example 8. This oil completely gelled after 50 hours of heating, and the entire mass became rubbery. These results demonstrate that the heat resistance of this phenol group-containing dimethylpolysiloxane oil is not good.

Comparison Example 9

The heat resistance of a phenol group-containing dimethylpolysiloxane oil with the average phenol equivalent 10,000,000 and a viscosity of 500 centistokes ($0.5x10^{-3}$ m2/s) was evaluated using the method of Example 8. This oil completely gelled after 50 hours of beating and the entire mass became rubbery. By this result, it became clear that the heat resistance of this phenol group-containing dimethylpolysiloxane oil is not good.

**Claims**

**1.** An organosiloxane lubricant composition comprising a hydroxyphenyl-substituted polydiorganosiloxane oil that is free of amino groups, has a viscosity at 25°C of from 10-100,000 centistokes (mm2/s), and an average phenol equivalent of from 10,000-5,000,000.

**2.** A composition according to claim 1 wherein said poly-diorganosiloxane oil comprises a mixture of
(A) 100 parts by weight of a polydiorganosiloxane oil that does not contain hydroxyphenyl groups or amino groups; and
(B) from 0.001 to 1000 parts by weight of a polydiorganosiloxane oil containing at least 1 hydroxyphenyl group per molecule and no amino groups.

**3.** A composition according to claim 2 wherein the hydroxyphenyl group has the formula

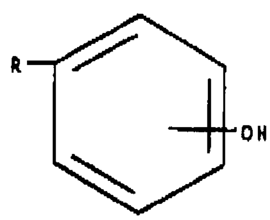

wherein R is a divalent hydrocarbon radical.

**4.** A compostion according to 2, wherein ingredient (A) is a trimethylsiloxy-capped dimethylpolysiloxane, and ingredient (B) is a trimethylsiloxy-capped dimethylpolysiloxane wherein at least 1 methyl radical is replaced with a 2-(p-hydroxyphenyl)ethyl radical or a 2-o-hydroxyphenyl)ethyl radical.

**5.** Use of composition according to Claims 1 or 2 in an application selected from mold-release agents, oils for synthetic fibers, and toner release agents.

European Patent Office

# EUROPEAN SEARCH REPORT

Application Number
EP 95 10 1160

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Section Ch, Week 8018<br>Derwent Publications Ltd., London, GB;<br>Class A26, AN 80-31697C<br>& JP-A-55 038 808 ( TORAY SILICONE KK) ,<br>19 March 1980<br>* abstract *<br>--- | 1-5 | C10M107/50<br>C08L83/06<br>C08L83/04<br>//(C10M107/50,<br>107:50),<br>C10N40:00,<br>C10N40:36 |
| X | EP-A-0 355 381 ( GENERAL ELECTRIC CO) 28<br>February 1990<br>* see Example 1; Table 1; page 6, lines<br>24-25; Claims 13-15 *<br>--- | 1-4 | |
| X | PATENT ABSTRACTS OF JAPAN<br>vol. 013 no. 479 (C-648) ,18 October 1989<br>& JP-A-01 188561 (SHIN ETSU CHEM CO LTD)<br>27 July 1989,<br>* abstract *<br>--- | 1,2 | |
| X | US-A-3 579 467 (E.D. BROWN) 18 May 1971<br>* see col 1, lines 1-26; col 1, line 55 -<br>col 2, lines1-12; col 8, lines 55 - col 9,<br>line 25 *<br>--- | 1,2 | TECHNICAL FIELDS SEARCHED (Int.Cl.6)<br>C10M<br>C08L |
| X | EP-A-0 423 724 (SHIN-ETSU CHEMICAL CO) 24<br>April 1991<br>* see page 2, lines 25-27; Examples;<br>Claims 1,9 *<br>----- | 1 | |

The present search report has been drawn up for all claims

| Place of search | Date of completion of the search | Examiner |
|---|---|---|
| MUNICH | 16 May 1995 | Kazemi, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)